(19) Europäisches Patentamt
European Patent Office
Office européen des brevets

(11) **EP 2 219 466 B1**

(12) **EUROPEAN PATENT SPECIFICATION**

(45) Date of publication and mention
of the grant of the patent:
**07.03.2012 Bulletin 2012/10**

(51) Int Cl.:
*A23F 5/24* (2006.01)   *A23F 5/46* (2006.01)
*A23G 1/56* (2006.01)

(21) Application number: **08850858.5**

(22) Date of filing: **15.10.2008**

(86) International application number:
**PCT/EP2008/063887**

(87) International publication number:
**WO 2009/062800 (22.05.2009 Gazette 2009/21)**

(54) **USE OF THIOESTER FLAVORS TO IMPROVE THE FLAVOR QUALITY OF READY-TO-DRINK COFFEE UPON RETORTING AND STORAGE**

VERWENDUNG VON THIOESTERAROMEN ZUR VERBESSERUNG DER GESCHMACKSQUALITÄT VON TRINKFERTIGEM KAFFEE NACH DER WÄRMEBEHANDLUNG UND LAGERUNG

UTILISATION D'AGENTS DE SAVEUR EN THIOESTERS POUR AMÉLIORER LA QUALITÉ DE SAVEUR D'UN CAFÉ PRÊT À BOIRE LORS DE LA TORRÉFACTION ET DU STOCKAGE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.11.2007 US 987471 P**

(43) Date of publication of application:
**25.08.2010 Bulletin 2010/34**

(73) Proprietor: **Nestec S.A.**
**1800 Vevey (CH)**

(72) Inventors:
• **HUYNH-BA, Tuong**
**CH-1009 Pully (CH)**
• **ZHANG, Yu, Chu**
**Norwalk, Connecticut 06851 (US)**
• **BORLAND, Carol**
**Richwood, Ohio 43344 (US)**
• **GRETSCH, Catherine**
**CH-1008 Prilly (CH)**
• **BLANK, Imre**
**CH-1073 Savigny (CH)**
• **KNIGHT, Charles, Andrew**
**Ostrander, Ohio 43061 (US)**

(74) Representative: **Lomholt, Stig Bredsted**
**Nestec S.A.**
**Avenue Nestlé 55**
**1800 Vevey (CH)**

(56) References cited:
EP-A- 1 170 295     US-A- 3 702 253
US-A- 3 958 029     US-A- 3 978 240

**Description**

FIELD OF THE INVENTION

The present invention relates to the field of ready-to-drink (RTD) coffee. In particular, the present invention relates to the addition of thioesters such as methyl, ethyl, prenyl, or furfurylthioacetates or blends thereof as flavor precursors to RTD coffee and optimizing thermal processing conditions to initiate a chemical reaction converting the thioacetate into a thiol form at a targeted rate in order to impart enhanced flavor qualities during consumption after thermal processing and storage.

BACKGROUND OF THE INVENTION

For preparing an RTD coffee, typically coffee extract powder or liquid coffee extract is dissolved in water, into which coffee aroma is added together with optional additives such as bicarbonate and sugar. Then, the resulting solution is thermally processed. The level of volatile coffee aroma compounds, in particular sulfur and nitrogen compounds, decreases and the coffee acidity increases upon thermal processing as well as during storage, thus negatively affecting the flavor quality of RTD.

Methylthiol and furfurylthiol are key aroma compounds in coffee imparting the roasted and coffee flavor attribute (O.G. Vitzthum, P. Werkhoff. Measurable changes of roasted coffee aroma in oxygen-permeable bag packs. Chemie, Mikrobiologie, Technologie der Lebensmittel, 1979,6(1), 25-30.). The flavor precursors, methyl and furfurylthioacetate, which generate methylthiol and furfurylthiol, respectively, through hydrolysis, are chemically more stable towards oxidation in comparison to the corresponding thiols. Methyl and furfurylthioacetate have been identified in coffee (I. Flament, Coffee Flavor Chemistry, John Wiley & Sons, LTD., 2002). US patent 3,702,253 discloses examples of adding flavor agents such as furfurylthioacetate alone or in combination with other sulfur flavor compounds to soluble coffee to modify the flavor of soluble coffee. These flavor agents can be added at a convenient step in the soluble coffee process such as plating the dried soluble coffee solids with a desired dilution of the flavor agent in an acceptable solution followed with drying. The flavor agents in solid or liquid form may also be added directly to a concentrated coffee extract and the mixture dried into a soluble coffee product which contains the flavor agent as an integral part thereof. The flavor agents may be incorporated into a dry powder beverage with or without whitener.

Thiol compounds such as furfurylthiol (FFT) have a much better flavor and aroma contribution than thioacetate compounds. However, thiol compounds degrade rapidly and readily, leaving the RTD product with little remaining aroma/flavor benefit. In contrast, thioacetate compounds such as furfurylthioacetate (FFT-Ac) are more durable than thiols, but do not provide the same degree of flavor and aroma benefit as the more easily-degraded thiol compound.

Typically, flavor agents are added late in the manufacturing process, as it is known that additional processing steps such as retorting can cause flavor loss and an increase in acidity, and these contribute to a reduction of flavor quality, particularly upon extended storage of the product. EP 1170295 A discloses a ready to drink coffee beverage comprising O-ethyl 5-(2-furylmethyl) thiocarbonate as a flavor precursor. Although somewhat successful attempts have been made to alleviate the effect of thermal processing on flavor loss and acidity increase, the problem of flavor quality degradation upon storage still remains to be solved. The present invention now resolves these problems.

SUMMARY OF THE INVENTION

The present invention overcomes the problems of the prior art by defining a method to maintain a constant supply of the rapidly-degraded thiol compounds. With this method, it is now possible to produce a thermally processed RTD coffee beverage having enhanced flavor and aroma features which last for at least 4 months at ambient temperature.

In particular, the present invention satisfies the need of the industry by adding thioesters such as thioacetates as flavor precursors to a coffee product prior to the thermal process and optimizing the thermal processing conditions to initiate a continuous chemical reaction that converts the thioesters or thioacetates into thiols. For example, the conversion of thioacetates into thiols takes place at a rate equal to the degradation rate of the thiol, thus ensuring that the beverage contains a sufficient amount of thiol compound to maintain a balanced flavor and aroma for a prolonged period. By adjusting the thermal proces conditions, the rate at which the thioacetates are converted into thiols can be optimized in order to ensure that the beverage contains sufficient thiol quantities that the flavor and aroma remain balanced for a prolonged period. In one embodiment, FFT-Ac and methylthioacetate (MT-Ac) are converted to FFT and methylthiol, respectively, at a rate to compensate for the loss ofmethylthiol (MT) and FFT during thermal processing and storage, thus transforming the resultant RTD coffee from a more "soluble coffee"-like taste to a more "freshly brewed"-like coffee taste during consumption. In another embodiment, prenylthioacetate was incorporated.

The invention also relates to a thermally processed and stored ready-to-drink liquid coffee product comprising a coffee extract, a stabilizer, a buffer, water and a thioester flavor precursor in an amount sufficient to provide improved flavor quality to the product after thermal processing and storage of the liquid product for more than 4 months at ambient temperature and for more than 1 month at 60°C storage.

The invention also relates to a method for preparing a ready-to-drink liquid coffee product having improved flavor quality comprising adding a thioester flavor precursor to the liquid product and thermally processing the resulting product. Advantageously, the thioester flavor precursor is added in an amount sufficient to provide improved flavor quality to the product after thermally processing and storage of the liquid product for more than 4 months at ambient temperature and for more than 1 month at 60°C storage.

The liquid product to be thermally processed is typically filled into cans having a nitrogen gas containing headspace. Advantageously, the flavor precursor is added as a solution of 1-10% in ethanol.

In these products and methods, the thioester flavor precursor is preferably furfurylthioacetate, methylthioacetate, prenylthioacetate or a mixture thereof, and is present at between about 0.005 to 7 mg/kg, preferably between about 0.1 to 5 mg/kg. The product may also include at least one sweetener or at least one whitener for coloring and flavoring of the beverage.

## BRIEF DESCRIPTION OF THE DRAWINGS

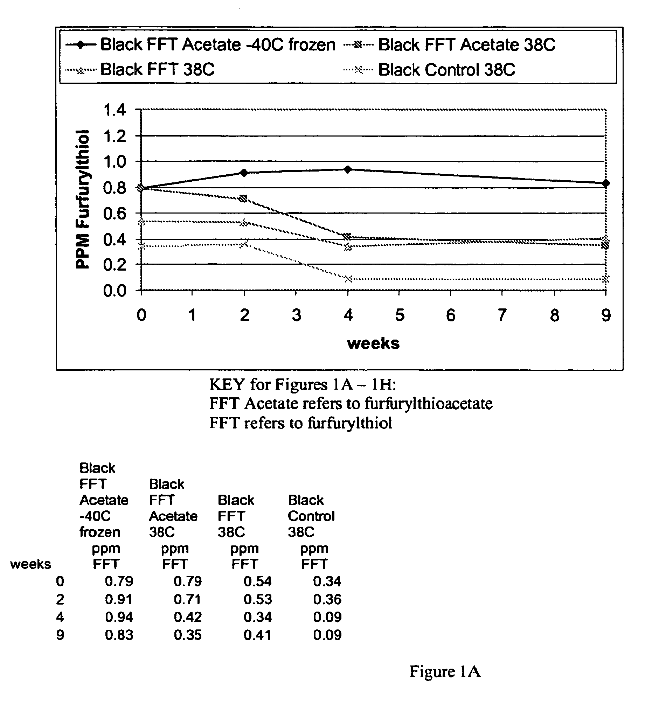

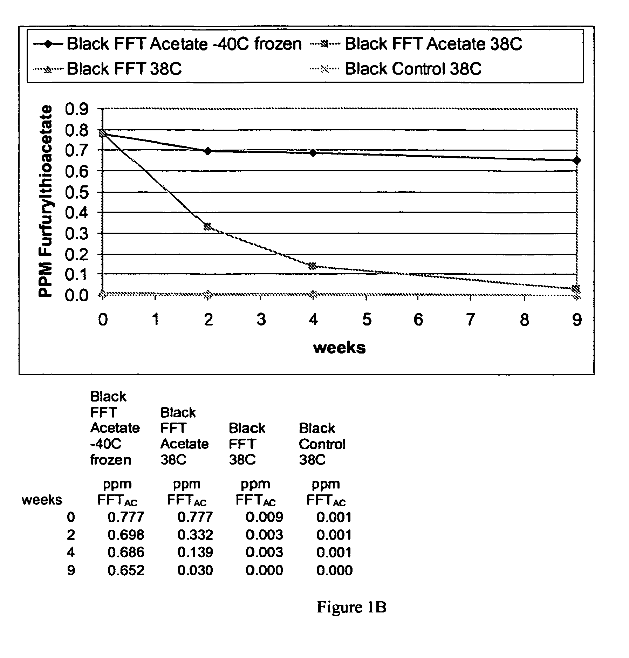

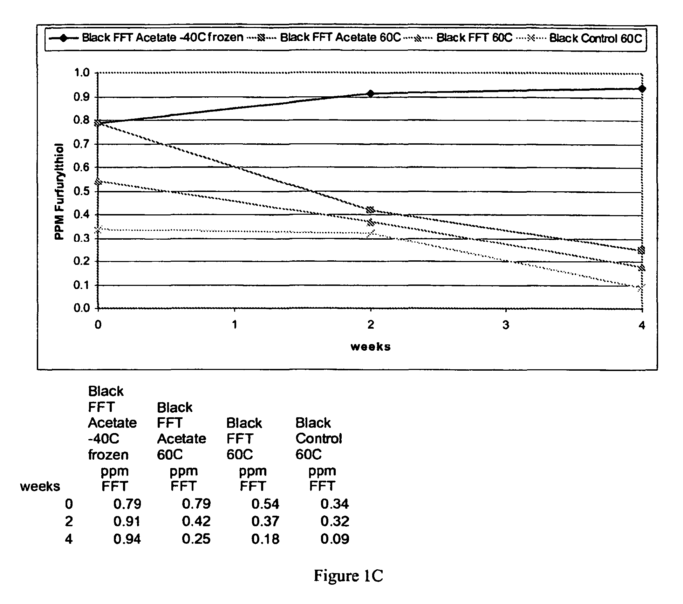

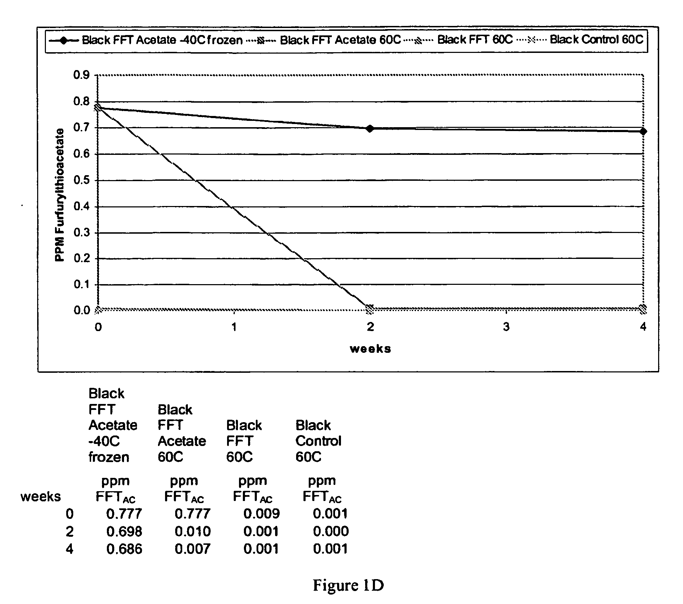

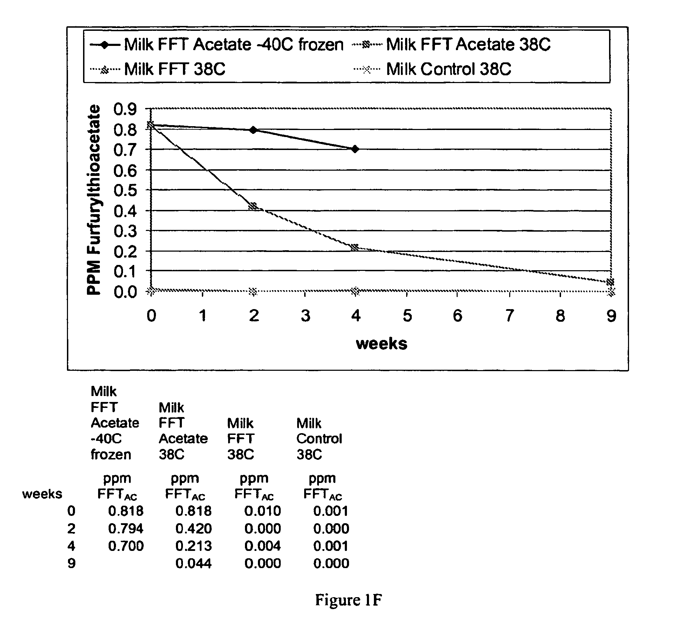

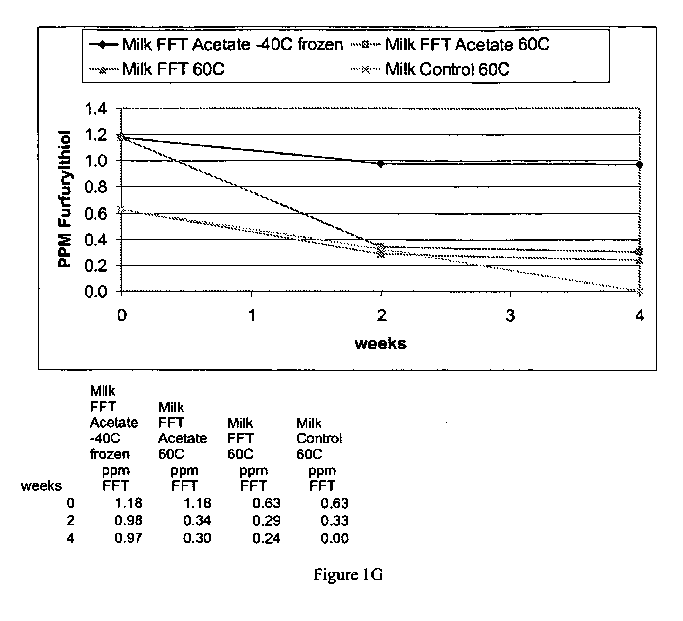

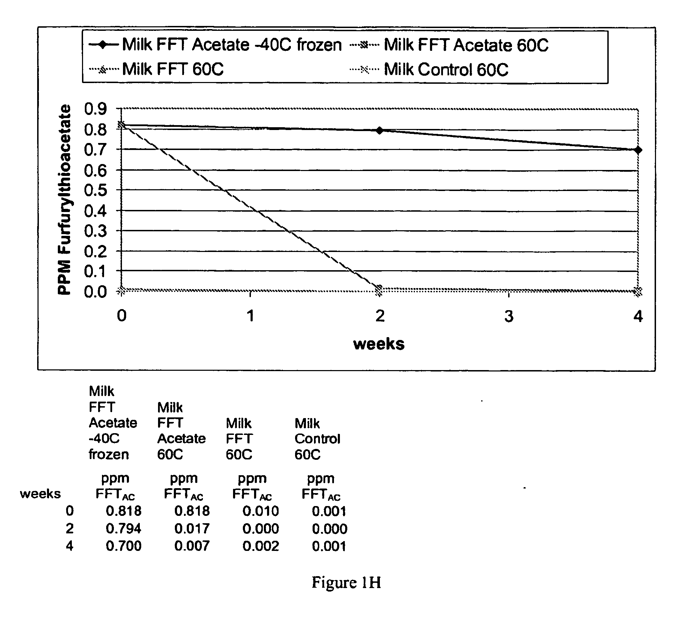

Figures 1A-D show the degradation of furfurylthioacetate at 38°C (curves A and B) or 60°C (curves C and D) in black RTD coffee.

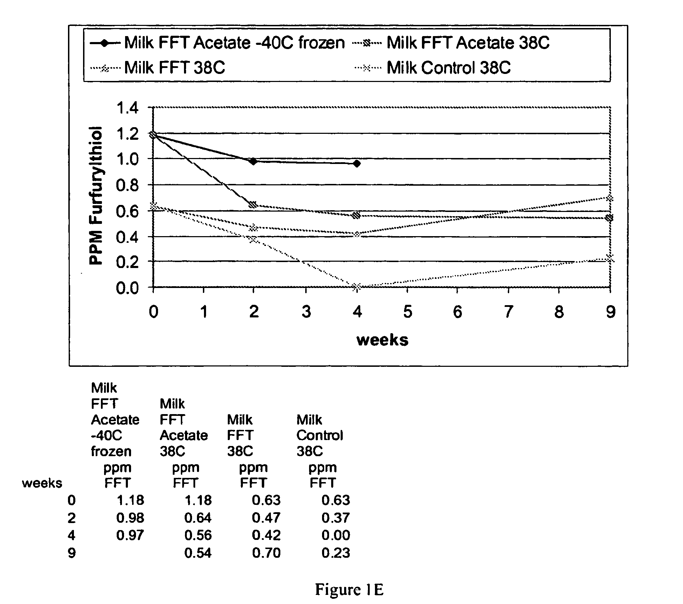

Figures 1E-H show the degradation of furfurylthioacetate at 38°C (curves E and F) or 60°C (curves G and H) in milk RTD coffee.

## DETAILED DESCRIPTION OF THE PREFERRED EMBODIMENTS

Generally, RTD coffee has less flavor and aroma than fresh coffee because aroma and flavor components are degraded during processing steps such as thermal processing and storage. It is now found that adding thioester flavor precursors such as methyl or furfurylthioacetates to RTD coffee before thermal processing improves the flavor and aroma and preserves those properties during storage, resulting in a fresher, cleaner, and more roasty and caramelized, but less bitter and ashy RTD coffee. This is a surprising result because these flavor precursors are expected to be degraded during thermal processing and storage. It has also been found that the level of the flavor precursor remains elevated during long storage. Furthermore, the level of the flavor molecule, either methylthiol or furfurylthiol, is also increased compared to control samples, as a result of precursor hydrolysis initiated by the acidity of RTD coffee. Due to the elevated level of the flavor precursors, the improved flavor and aroma effect is still perceived during consumption after more than 4 months at ambient temperature and for more than I month at 60°C storage

Accordingly, the present invention improves the flavor quality of a thermally processed coffee product by adding a thioester flavor precursor of the general structure R-S-CO-R', wherein R is selected from the group of methyl, ethyl, propyl, isopropyl, phenyl, furfuryl, and wherein R' is selected from the group H, methyl, ethyl, propyl, isopropyl; preferably furfurylthioacetate, methylthioacetate, prenylthioacetate or a mixture thereof, present in an amount sufficient to provide improved flavor quality to the product for more than 4 months at ambient temperature and for more than I month at 60°C storage.

In one embodiment of the present invention, the concentration of the flavor precursor in the coffee product to be thermally processed ranges between about 0.005 to 7 mg/kg, preferably between about 0.1 to 5 mg/kg.

The coffee product to be thermally processed in the present invention further comprises a coffee extract, a stabilizer, a buffer, and water, preferably reduced oxygen content water.

The coffee can be derived from roasted arabica, robusta, or any combination of beans, ground and instant powder, and preferably, in the form of concentrated coffee extract solids. The concentration of the coffee extract solids is approximately 0.5-20%, more preferably 0.75-1.5%, and most preferably 0.95-1.1 % by weight. These solids are dissolved in water to form the liquid product. The water is between approximately 80-95%, more preferably between approximately 85-92%, and most preferably between approximately 85-90% by weight of the total product.

The product further comprises buffers such as water-soluble potassium or sodium salts to adjust the pH. Any water-soluble buffers can be used. In addition to the potassium or sodium salts others such as potassium or sodium carbonate, potassium or sodium bicarbonate, dipotassium or disodium hydrogen phosphate, potassium or sodium dihydrogen phosphate, tripotassium or trisodium phosphate, potassium or sodium hydroxide, potassium or sodium succinate, potassium or sodium malate, potassium or sodium citrate, and mixtures thereof. Preferably, the buffer is selected from the group consisting of sodium or potassium bicarbonate, sodium or potassium carbonate, sodium or potassium citrate, and disodium or dipotassium hydrogen phosphate. The pH of the finished product is typically adjusted to between approximately 6 and 8 and preferably between 6.5 and 7.7. The potassium or sodium salt may be present in an amount of from about 0.1% to about 0.2% by weight of the total composition.

The product may also comprise a stabilizer. The stabilizer may contain conventional emulsifiers and gums and may also contain an optional milk derivative.

The product may generally comprise a sweetener or a combination of sweeteners. The sweetener may be any sweetener normally used in food processing, either natural or artificial, for example sugar alcohols and sugars such as sucrose, fructose, dextrose, maltose, lactose, high fructose corn syrup solids, erythritol, or mixtures thereof. The sweetener may be any suitable synthetic or natural sweetener, which may be a higher intensity sweetener and used in combination with the sugar or sugar alcohol. Examples of such sweeteners include, for example, sucralose, acesulfame potassium (acesulfame-K), and mixtures thereof. The sweetener may further comprise a mixture of natural or synthetic sweeteners, such as a sugar or sugar alcohol, used in combination with, for example, a high intensity sweetener. Any mixture or combination of natural or artificial sweeteners may be used. Other sweeteners normally used in food or beverage processing can be used if desired. Preferably the sweetener is selected from the group consisting of sucrose, dextrose, fructose, high fructose corn syrup, sucralose, and acesulfame-K. Typically, the sweetener will be present in an amount or amounts to provide a desired sweetness and a typical range is from about 0.5% to about 6% by weight of the total composition.

When a whitened coffee product is desired, the product may further comprise a whitener. Whiteners can include milk, cream, whey, yoghurt, ice cream, emulsifiers, maltodextrins, pectins, natural and synthetic gums and natural or chemically modified starches or mixtures thereof. Preferably, the whitener is milk, cream, non dairy creamer, soymilk, rice milk, and coconut milk.

The product may further comprise fortifying with vitamins. Any vitamin normally used in food processing can be used, such as but not limited to, ascorbic acid, biotin, folic acid, niacinamide and riboflavoid. The most preferred vitamin used in the product is ascorbic acid.

The product may further comprise a flavor component, either natural or artificial, as may be desired, such as almond, amaretto, anise, apple, brandy, caramel, cappuccino, cider, cinnamon, cherry, chocolate, chocolate mint, cocoa, coffee, creme de menthe, french vanilla, grape, hazelnut, irish cream, lemon, macadamia nut, mocha, orange, peach, peppermint, pistachio, strawberry, vanilla, wintergreen or mixtures thereof. Any other flavor normally used within the food or beverage processing industry may be utilized. Preferred flavors for the product include almond, amaretto, caramel, cappuccino, cider, cinnamon, chocolate, chocolate mint, cocoa, coffee, creme de menthe, hazelnut, mocha, peppermint, vanilla or mixtures thereof. The most preferred flavors include cocoa, vanilla, caramel and chocolate mint. Typically, the flavor or flavors are present in an amount of from about 0.1% to about 1% by weight of the total product.

The invention also relates to a method of delivering aroma and flavor to ready to drink coffee beverage comprising coffee extract, stabilizer, buffer and water, which comprises (1) adding a thioester precursor of the general structure R-S-CO-R' to the beverage, wherein R is selected from the group of methyl, ethyl, propyl, isopropyl, prenyl, furfuryl, wherein R' is selected from the group of H. methyl, ethyl, propyl, isopropyl and wherein the thioester precursor is present in the range of 0.005 to 7 mg/kg, such as 0.01 to 7 mg/kg, to provide improved flavor quality to said beverage for more than 4 months at ambient temperature and for more than 1 month at 60°C storage; and (2) treating the resulting product with a thermal processing, such as retort, UHT, pasteurization, in the temperature range of 85°C to 170°C under an inert atmosphere. The effect of the thermal processing may be expressed by the $F_0$ value. $F_0$ is commonly used in the food industry to express the effect of thermal processing on microorganisms, and is the equivalent exposure time at 121°C with regard to reduction of microorganisms and is expressed in minutes. $F_0$ is calculated as:

$$F_0 = t*10^{(T-121)/10}$$

wherein t is treatment time in minutes and T is the actual temperature of treatment in degrees Celsius.

In one embodiment of the invention the thermal processing is performed at conditions to yield $F_0$ value of between 3 and 45.

In one embodiment of the invention, the thioester precursor is present in the range of 0.1 to 5 mg/kg. Preferably, the thioester precursor is furfurylthioacetate, methylthioacetate, prenylthioacetate or a mixture thereof.

In the method of the present invention, the inert atmosphere is preferably created by high purity nitrogen gas, argon, nitrous oxide, or carbon dioxide.

In another embodiment of the present invention, the temperature range used in the thermal processing to produce the flavor is 121.6°C through 143°C with $F_0$ values of 3 to 45.

In the present method, the coffee extract may be derived from roasted arabica, robusta, or any combination of beans, ground and instant powder, and the buffer may be selected from the group consisting of sodium or potassium bicarbonate, sodium or potassium carbonate, sodium or potassium citrate, and disodium or dipotassium hydrogen phosphate.

In one embodiment of the present method, the stabilizer may contain conventional emulsifiers and gums and may also contain an optional milk derivative.

In another embodiment of the present method, the ready to drink coffee beverage further comprises one or more sweeteners selected from the group consisting of sucrose, dextrose, fructose, high fructose corn syrup, sucralose, and acesulfame-K.

In yet another embodiment of the present method, the ready to drink coffee beverage further comprises one or more whiteners selected from the group consisting of milk, cream, non dairy creamer, soymilk, rice milk, and coconut milk.

The present invention also relates to a method of generating coffee aroma and flavor notes comprising adding FFT-Ac and initiating a chemical reaction at a desired rate in order to generate a desired level of FFT which serves as an aroma and flavor enhancer. The chemical reaction can be triggered by a thermal processing, such as retort, UHT, pasteurization, in temperature range of 85°C to 170°C under inert atmosphere.

EXAMPLES

The following examples are merely illustrative of the present invention and they should not be considered as limiting the scope of the invention in any way, as these examples and other equivalents thereof will become apparent to those skilled in the art in light of the present disclosure and the accompanying claims.

Example 1 Black RTD Coffee

Arabica coffee is roasted, ground, extracted under inert atmosphere and stored in a canister with nitrogen protection.

Black RTD Coffee Final Product having the formula shown in Table 1 is prepared as follows:

(1) combining sugar and sodium bicarbonate buffer in a nitrogen protected atmosphere with mixing;
(2) adding nitrogen protected coffee extract from canister to above with mixing;
(3) adding flavor precursor (furfurylthioacetate, supplied at 1% in ethanol) with mixing;
(4) filling into steel cans with nitrogen gas headspace, seaming and retorting at $F_0$ = 35

The flavor precursor furfurylthioacetate is obtained from specialized Flavor Houses.

Table 1. Formula for Black RTD Coffee Final Product with Added Flavor Precursor

| Ingredient | Kgs/15 Kg |
|---|---|
| Sucrose | 0.45000 |
| Coffee Extract | 8.62800 |
| Buffer | 0.02250 |
| Flavor Precursor | 0.00006 |
| Ethanol | 0.00594 |
| Water | 5.89310 |
| **TOTAL** | 15.00000 |

A control Black RTD Coffee Final Product is prepared by adding ethanol without flavor precursor (see Formula in Table 2).

Table 2. Formula for Control Black RTD Coffee Final Product

| Ingredient | Kgs/15 Kg |
|---|---|
| Sucrose | 0.450 |
| Coffee Extract | 8.628 |
| Buffer | 0.023 |
| Ethanol | 0.006 |

(continued)

| Ingredient | Kgs/15 Kg |
|------------|-----------|
| Water | 5.893 |
| **TOTAL** | 15.000 |

As a further comparison, another Black RTD Coffee Final Product with added flavor (furfurylthiol, supplied at 1% in ethanol) instead of flavor precursor is also prepared (see Formula in Table 3).

Table 3. Formula for Black RTD Coffee Final Product with Added Flavor

| **Ingredient** | **Kgs/15 Kg** |
|----------------|---------------|
| Sucrose | 0.450000 |
| Coffee Extract | 8.628000 |
| Buffer | 0.022500 |
| Flavor (Furfurylthiol) | 0.000044 |
| Ethanol | 0.004356 |
| Water | 5.895100 |
| **TOTAL** | 15.000000 |

The Black RTD Coffee Final Products and controls are stored at -40°C, 38°C and 60°C.

Example 2 Milk Based RTD Coffee

Arabica coffee extract is prepared as described in Example 1.
(a) Preparation of Milk Base solution having the formula shown in Table 4:
(1) predissolving stabilizer in water using high shear mixing;
(2) adding the predissolved stabilizer to heated milk and cream with mixing;
(3) homogenizing; and
(4) storing in canister under nitrogen gas protection.

Table 4. Formula for Milk base

| **Ingredient** | **Kgs/100 Kg** |
|----------------|----------------|
| Heavy Cream | 3.758 |
| Fluid Milk(Whole) | 79.253 |
| Stabilizer | 0.989 |
| Water | 16.000 |
| Total | 100.000 |

(b) Preparation of Milk RTD Coffee Final product having the formula shown in Table 5:
(1) Combining sugar and buffer in nitrogen protected atmosphere with mixing;
(2) adding nitrogen protected coffee extract from canister to above with mixing;
(3) adding milk base from canister with mixing;
(4) adding flavor precursor (furfurylthioacetate, supplied at I % in ethanol) or flavor (furfurylthiol, supplied at 1% in ethanol) with mixing; and
(5) filling into steel cans with nitrogen gas headspace, seaming and retorting at $F_0 = 35$.

Table 5. Formula for Milk RTD Coffee Final product with added Precursor

| **Ingredient** | **Kgs/15 Kg** |
|----------------|---------------|
| Sucrose | 0.78000 |

(continued)

| Ingredient | Kgs/15 Kg |
|---|---|
| Coffee Extract | 11.25000 |
| Milk Base | 2.63100 |
| Buffer | 0.02250 |
| Flavor Precursor (FFT-Ac) | 0.00006 |
| Ethanol | 0.00594 |
| Water | 0.31050 |
| **TOTAL** | 15.00000 |

Table 6. Formula for Milk RTD Coffee Final product with added Flavor

| Ingredient | Kgs/15 Kg |
|---|---|
| Sucrose | 0.78000 |
| Coffee Extract | 11.25000 |
| Milk Base | 2.63100 |
| Buffer | 0.02250 |
| Flavor (furfurylthiol) | 0.00006 |
| Ethanol | 0.00594 |
| Water | 0.31050 |
| **TOTAL** | 15.00000 |

Control Milk RTD Coffee Final Product is prepared by omitting flavor precursor or flavor (see Formula in Table 7).

Table 7. Formula for Control Milk RTD Coffee Final product

| Ingredient | Kgs/15 Kg |
|---|---|
| Sucrose | 0.7800 |
| Coffee Extract | 11.2500 |
| Milk Base | 2.6310 |
| Buffer | 0.0225 |
| Ethanol | 0.0060 |
| Water | 0.3105 |
| **TOTAL** | 15.0000 |

Results of the sensory analysis and chemical analysis are as follows:

Sensory Analysis

12 panelists who are experienced in assessing taste differences in coffee products evaluated and compared the previous samples. Each stored sample was compared to the frozen reference (-40°C furfurylthioacetate sample) and scored on a scale of -5 to +5 with the frozen reference being 0.

Results are as follows for the black products:

|  | Acidic/Sour Flavor | Roasty Flavor |
|---|---|---|
| **REF = 2237.02 w FFT Acetate Black 4wks -40C** | **0** | **0** |

(continued)

|  | Acidic/Sour Flavor | Roasty Flavor |
|---|---|---|
| Sample 2 = 2237.01 Control Black 4wks 60C | 0.67 | -0.67 |
| Sample 3 =2237.02 w FFT Acetate Black 4wks 60C | 0.36 | -0.61 |
| Sample 4 = 2237.03 w Furfurylthiol Black 4wks 60C | 0.59 | -1.1 |

The Black FFT Acetate product stored 4 wks at 60°C had more roasty flavor and less acidic/sour flavor.

Results are as follows for the milk products:

|  | Coffee Aroma | Roasty Aroma | Dairy Sour Flavor | Roasty Flavor | Coffee Flavor |
|---|---|---|---|---|---|
| REF = 2232.03 w FFT Acetate Milk 4wks -40C | 0 | 0 | 0 | 0 | 0 |
| Sample 2 = 2232.02 Control Milk 4wks 60C | -0.40 | -0.48 | 0.13 | -.061 | -0.58 |
| Sample 3 = 2232.03 w FFT Acetate Milk 4wks 60C | 0.09 | -0.09 | 0.11 | -0.21 | -0.18 |
| Sample 4 =2232.04 w Furfurylthiol Milk 4wks 60C | -0.71 | -1.23 | 0.65 | -1.04 | -1.04 |

The Milk FFT Acetate product stored 4 wks at 60°C had more coffee aroma, more roasty aroma, more roasty flavor, more coffee flavor and was lowest in dairy sour flavor.

## Chemical Analysis

A standard laboratory method was used to evaluate the previous samples throughout storage for pH. pH results are as follows for the black products:

|  | Before retort | After retort | 2 wk (-40C) | 2 wk 38C | 2 wk 60C | 4 wk (-40C) | 4 wk 38C | 4 wk 60C |
|---|---|---|---|---|---|---|---|---|
| 2237.01 Control Black | 6.82 | 6.12 |  | 6.22 | 6.13 |  | 6.20 | 6.10 |
| 2237.02 w FFT Acetate Black | 6.80 | 6.11 | 6.25 | 6.23 | 6.16 | 6.32 | 6.41 | 6.28 |
| 2237.03 w Furfurylthiol Black | 6.81 | 6.13 |  | 6.24 | 6.18 |  | 6.20 | 6.08 |

The Black FFT Acetate product had a pH of 0.18 and 0.20 units higher after 4 wks storage at 60°C compared to the Control and Furfurylthiol products, respectively. Acidity formation in RTD coffee is a well known problem and affects the sensory quality of the product during storage. The addition of FFT Acetate offers a way to prevent acid formation and improve the RTD coffee flavor.

pH results are as follows for the milk products:

|  | Before retort | After resort | 2wk (-40C) | 2 wk 38C | 2wk 60C | 4 wk (-40C) | 4 wk 38C | 4 wk 60C |
|---|---|---|---|---|---|---|---|---|
| 2232.02 Control |  |  |  |  |  |  |  |  |

(continued)

| | Before retort | After resort | 2wk (-40C) | 2 wk 38C | 2wk 60C | 4 wk (-40C) | 4 wk 38C | 4 wk 60C |
|---|---|---|---|---|---|---|---|---|
| Milk 2232.03 w FFT | 6.85 | 6.31 | | 6.36 | 6.32 | | 6.25 | 6.10 |
| Acetate Milk 2232.04 w | 6.85 | 6.33 | 6.57 | 6.56 | 6.50 | 6.59 | 6.56 | 6.45 |
| Furfurylthiol Milk | 6.87 | 6.35 | | 6.44 | 6.36 | | 6.44 | 6.32 |

Surprisingly, the Milk FFT Acetate product maintained a higher pH throughout storage. It was 0.35 and 0.13 units higher than the Control and Furfurylthiol products, respectively, after 4 wks storage at 60°C. This higher pH value would explain why the FFT Acetate stored product had less sour dairy flavor compared to the Control and Furfurylthiol products. We have observed less sour dairy flavor formation during storage using this same Milk FFT Acetate formula when tasted side by side with an untreated Control in a previous study that was stored at 38°C for 6 months.

Two chemical compounds were monitored in these products during storage using a calibrated Isotope Dilution Headspace SPME method and labeled standards. These were furfurylthiol and furfurylthioacetate ( see figures 1A-H).

## Claims

1. A thermally processed and stored ready to drink liquid coffee product comprising a coffee, a stabilizer, a buffer, water and a thioester flavor precursor in an amount sufficient to provide improved flavor quality to the product after thermal processing and storage of the liquid product for more than 4 months at ambient temperature and for more than 1 month at 60°C storage,
   wherein the thioester flavor precursor is of the general structure of R-S-CO-R', wherein R is selected from the group of methyl, ethyl, propyl, isopropyl, prenyl, furfuryl, wherein R' is selected from the group ofH, methyl, ethyl, propyl, isopropyl.

2. The product of claim 1, wherein the concentration of the thioester flavor precursor is between about 0.005 to 7 mg/kg.

3. The product of claim 1, wherein the thioester flavor precursor is furfurylthioacetate, methylthioacetate, prenylthioacetate or mixtures thereof, and the concentration of the thioester flavor precursor is between 0.1 to 5 mg/kg.

4. The product of claim 1, wherein the coffee is derived from roasted arabica, robusta, or any combination of beans, ground and instant powder.

5. The product of claim 1, wherein the buffer is selected from the group consisting of sodium or potassium bicarbonate, sodium or potassium carbonate, sodium or potassium citrate, and disodium or dipotassium hydrogen phosphate.

6. The product of claim 1, wherein the stabilizer may contain conventional emulsifiers and gums and may also contain an optional milk derivative.

7. The product of claim 1 further comprising one or more sweeteners selected from the group consisting of sucrose, dextrose, fructose, high fructose corn syrup, sucralose, and acesulfame-K.

8. The product of claim 1, further comprising one or more whiteners selected from the group consisting of milk, cream, non dairy creamer, soymilk, rice milk, and coconut milk.

9. A method of delivering aroma and flavor to ready to drink coffee beverage comprising coffee, stabilizer, buffer and water, comprising adding a thioester precursor of the general structure of R-S-CO-R' to the beverage, wherein R is selected from the group of methyl, ethyl, propyl, isopropyl, prenyl, furfuryl, wherein R' is selected from the group ofH, methyl, ethyl, propyl, isopropyl, and wherein the thioester precursor is present in the range of 0.005 to 7 mg/kg to provide improved flavor quality to said beverage for more than 4 months at ambient temperature and for more than 1 month at 60°C storage; and treating the resulting product with a thermal processing such as retort, UHT, pasteurization, in temperature range of 85°C to 170°C under inert atmosphere.

10. The method of claim 9, wherein the thioester precursor is present in the range of 0.1 to 5 mg/kg.

11. The method of claim 9, wherein the thioester precursor is furfurylthioacetate, methylthioacetate, prenylthioacetate or a mixture thereof.

12. The method of claim 9, wherein the inert atmosphere is created by high purity nitrogen gas, argon, nitrous oxide, or carbon dioxide.

13. The method of claim 9, wherein the temperature range to produce the flavor is 121.6°C through 143°C with $F_0$ values of 3 to 45.

14. The method of claim 9, wherein the coffee is derived from roasted arabica, robusta, or any combination of beans, ground or instant powder or a blend thereof.

15. The method of claim 9, wherein the buffer is selected from the group consisting of sodium or potassium bicarbonate, sodium or potassium carbonate, sodium or potassium citrate, and disodium or dipotassium hydrogen phosphate.

16. The method of claim 9, wherein the stabilizer may contain conventional emulsifiers and gums and may also contain an optional milk derivative

17. The method of claim 9, wherein the ready to drink coffee beverage further comprises one or more sweeteners selected from the group consisting of sucrose, dextrose, fructose, high fructose corn syrup, sucralose, and acesulfame-K.

18. The method of claim 9, wherein the ready to drink coffee beverage further comprises one or more whiteners selected from the group consisting of milk, cream, non dairy creamer, soymilk, rice milk, and coconut milk.

19. A method of generating coffee aroma and flavor notes comprising adding furfurylthioacetate (FFT-Ac) and initiating a chemical reaction at a desired rate in order to generate a desired level of FFT which serves as an aroma and flavor enhancer, wherein the chemical reaction is triggered by a thermal processing such as retort, UHT, pasteurization, in temperature range of 85°C to 170°C under inert atmosphere.

**Patentansprüche**

1. Thermisch verarbeitetes und gelagertes, trinkfertiges, flüssiges Kaffeeprodukt, enthaltend einen Kaffee, einen Stabilisator, einen Puffer, Wasser und einen Thioester-Aroma-Precursor in einer Menge, die ausreicht, um dem Produkt nach thermischer Verarbeitung und Lagerung des flüssigen Produkts für mehr als 4 Monate bei Raumtemperatur und Lagerung für mehr als 1 Monat bei 60° C eine verbesserte Aroma-Qualität zu verleihen, wobei der Thioester-Aroma-Precursor die allgemeine Struktur R-S-CO-R' hat, wobei R ausgewählt ist aus der Gruppe von Methyl, Ethyl, Propyl, Isopropyl, Prenyl, Furfuryl, wobei R' ausgewählt ist aus der Gruppe von H, Methyl, Ethyl, Propyl, Isopropyl.

2. Produkt nach Anspruch 1, wobei die Konzentration des Thioester-Aroma-Precursors zwischen etwa 0,005 bis 7 mg/kg liegt.

3. Produkt nach Anspruch 1, wobei der Thioester-Aroma-Precursor Furfurylthioacetat, Methylthioacetat, Prenylthioacetat oder Mischungen davon ist und die Konzentration des Thioester-Aroma-Precursors zwischen 0,1 bis 5 mg/kg liegt.

4. Produkt nach Anspruch 1, wobei der Kaffee von gerösteten Arabica-, Robusta-, oder jeder Kombination von Bohnen, gemahlen und Instant-Pulver, stammt.

5. Produkt nach Anspruch 1, wobei der Puffer ausgewählt ist aus der Gruppe bestehend aus Natrium- oder Kaliumbicarbonat, Natrium- oder Kaliumcarbonat, Natrium- oder Kaliumcitrat und Dinatrium- oder Dikaliumhydrogenphosphat.

6. Produkt nach Anspruch 1, wobei der Stabilisator herkömmliche Emulgatoren und Gummen enthalten kann und auch ein optionales Milchderivat enthalten kann.

7. Produkt nach Anspruch 1, das ferner einen oder mehrere Süßstoffe ausgewählt aus der Gruppe bestehend aus Saccharose, Dextrose, Fructose, Maissirup mit hohem Fructosegehalt, Sucralose und Acesulfam-K enthält.

8. Produkt nach Anspruch 1, das ferner einen oder mehrere Kaffeweisser ausgewählt aus der Gruppe bestehend aus Milch, Sahne, milchfreier Kaffesahne, Sojamilch, Reismilch und Kokosmilch enthält.

9. Verfahren zur Aroma- und Geschmacksgebung eines trinkfertigen Kaffeegetränks, enthaltend Kaffee, Stabilisator, Puffer und Wasser, bei dem ein Thioester-Precursor der allgemeinen Struktur R-S-CO-R' zu dem Getränk gegeben wird, wobei R ausgewählt ist aus der Gruppe von Methyl, Ethyl, Propyl, Isopropyl, Prenyl, Furfuryl, wobei R' ausgewählt ist aus der Gruppe von H, Methyl, Ethyl, Propyl, Isopropyl, und wobei der Thioester-Precursor in dem Bereich von 0,005 bis 7 mg/kg vorliegt, um dem Getränk für eine Lagerung von mehr als 4 Monaten bei Raumtemperatur und für mehr als 1 Monat bei 60° C eine verbesserte Geschmacks-Qualität zu verleihen; und bei dem das erhaltene Produkt mit einer thermischen Verarbeitung wie zum Beispiel Retorte, UHT , Pasteurisierung, im Temperaturbereich von 85° C bis 170° C unter Schutzgasatmosphäre behandelt wird.

10. Verfahren nach Anspruch 9, wobei der Thioester-Precursor im Bereich von 0,1 bis 5 mg/kg vorliegt.

11. Verfahren nach Anspruch 9, wobei der Thioester-Precursor Furfurylthioacetat, Methylthioacetat, Prenylthioacetat oder eine Mischung davon ist.

12. Verfahren nach Anspruch 9, wobei die Schutzgasatmosphäre durch hochreines Stickstoffgas, Argon, Stickstoffoxid oder Kohlendioxid erzeugt wird.

13. Verfahren nach Anspruch 9, wobei der Temperaturbereich zur Erzeugung des Aromas 121,6° C bis 143° C mit $F_0$-Werten von 3 bis 45 ist.

14. Verfahren nach Anspruch 9, wobei der Kaffee von gerösteten Arabica-, Robusta-, oder jeder Kombination von Bohnen, gemahlen oder Instant-Pulver, oder einer Mischung davon stammt.

15. Verfahren nach Anspruch 9, wobei der Puffer aus der Gruppe bestehend aus Natrium- oder Kaliumbicarbonat, Natrium- oder Kaliumcarbonat, Natrium- oder Kaliumcitrat und Dinatrium- oder Dikaliumhydrogenphosphat ausgewählt ist.

16. Verfahren nach Anspruch 9, wobei der Stabilisator herkömmliche Emulgatoren und Gummen enthalten kann und auch ein optionales Milchderivat enthalten kann.

17. Verfahren nach Anspruch 9, wobei das trinkfertige Kaffeegetränk ferner einen oder mehrere Süßstoffe ausgewählt aus der Gruppe bestehend aus Saccharose, Dextrose, Fructose, Maissirup mit hohem Fructosegehalt, Sucralose und Acesulfam-K enthält.

18. Verfahren nach Anspruch 9, wobei das trinkfertige Kaffeegetränk ferner einen oder mehrere Kaffeweisser ausgewählt aus der Gruppe bestehend aus Milch, Sahne, milchfreier Kaffesahne, Sojamilch, Reismilch und Kokosmilch enthält.

19. Verfahren zur Erzeugung von Kaffee-Aroma und Geschmacksnoten, bei dem Furfurylthioacetat (FFT-Ac) zugegeben wird und eine chemische Reaktion mit einer erwünschten Geschwindigkeit eingeleitet wird, um ein erwünschtes Level an FFT zu erzeugen, das als Aroma- und Geschmacksverstärker dient, wobei die chemische Reaktion durch eine thermische Aufbereitung wie zum Beispiel Retorte, UHT, Pasteurisierung, im Temperaturbereich von 85° C bis 170° C unter Schutzgasatmosphäre ausgelöst wird.

**Revendications**

1. Un produit de café liquide, prêt à boire, traité thermiquement et stocké, comprenant un café, un stabilisateur, un tampon, de l'eau et un précurseur de saveur thioester dans une quantité suffisante pour fournir une qualité de saveur améliorée au produit après un traitement thermique et un stockage du produit liquide pendant plus de 4 mois à température ambiante et un stockage pendant plus de 1 mois à 60 °C,
dans lequel le précurseur de saveur thioester a une structure générale qui est R-S-COR', dans lequel R est sélectionné parmi le groupe comprenant méthyle, éthyle, propyle, isopropyl, prényle, furfuryle, dans lequel R' est sélectionné parmi le groupe comprenant H, méthyle, éthyle, propyle, isopropyl.

2. Le produit selon la revendication 1, dans lequel la concentration du précurseur de saveur thioester est comprise entre 0,005 et 7 mg/kg.

3. Le produit selon la revendication 1, dans lequel le précurseur de saveur thioester est le thyoacétate furfuryle, le thyoacétate méthyle, le thyoacétate prényle ou des mélanges de ceux-ci, et la concentration du précurseur de saveur thioester est comprise entre 0,1 et 5 mg/kg.

4. Le produit selon la revendication 1, dans lequel le café est dérivé du café arabica torréfié, du café robusta torréfié ou de n'importe quelle combinaison de fèves, de café moulu et de poudre instantanée.

5. Le produit selon la revendication 1, dans lequel le tampon est sélectionné parmi le groupe constitué par le bicarbonate de sodium ou de potassium, le carbonate de sodium ou de potassium, le citrate de sodium ou de potassium, et le phosphate d'hydrogène disodique ou le phosphate d'hydrogène dipotassium.

6. Le produit selon la revendication 1, dans lequel le stabilisateur peut contenir des émulsifiants conventionnels et des gommes et peut également contenir un dérivé de lait optionnel.

7. Le produit selon la revendication 1, comprenant en outre un ou plusieurs édulcorants sélectionnés parmi le groupe constitué par le saccharose, le dextrose, le fructose, le sirop de maïs à haute teneur en fructose, le sucralose, et l'acésulfame K.

8. Le produit selon la revendication 1, comprenant en outre un ou plusieurs agents blanchissant sélectionnés parmi le groupe constitué par le lait, la crème, la crème artificielle d'origine non laitière, le lait de soja, le lait de riz, et le lait de noix de coco.

9. Un procédé pour distribuer de l'arôme et de la saveur à une boisson de café prête à boire comprenant du café, un stabilisateur, un tampon, et de l'eau, comprenant l'ajout d'un précurseur thioester de structure générale R-S-CO-R' dans la boisson, dans lequel R est sélectionné parmi le groupe comprenant méthyle, éthyle, propyle, isopropyl, prényle, furfuryle, dans lequel R' est sélectionné parmi le groupe comprenant H, méthyle, éthyle, propyle, isopropyl, et dans lequel le précurseur thioester est présent dans la plage de 0,005 à 7 mg/kg pour fournir une qualité de saveur améliorée au produit pour un stockage de plus de 4 mois à température ambiante et de plus de 1 mois à 60 °C ; et le produit résultant est traité avec un traitement thermique tel que l'autoclave, l'UHT, la pasteurisation, dans un domaine de température entre 85 °C à 170 °C sous atmosphère inerte.

10. Le procédé selon la revendication 9, dans lequel le précurseur thioester est présent dans la plage comprise entre 0,1 et 5 mg/kg.

11. Le procédé selon la revendication 9, dans lequel le précurseur thioester est le thioacétate furfuryle, le thioacétate méthyle, le thioacétate prényle ou un mélange de ceux-ci.

12. Le procédé selon la revendication 9, dans lequel l'atmosphère inerte est créée par du gaz d'azote, de l'argon, du protoxyde d'azote, ou du dioxyde de carbone à haut degré de pureté.

13. Le procédé selon la revendication 9, dans lequel la plage de température pour produire la saveur est comprise entre 121,6 °C et 143 °C avec des valeurs $F_0$ de 3 à 45.

14. Le procédé selon la revendication 9, dans lequel le café est dérivé du café arabica torréfié, du café robusta torréfié ou de n'importe quelle combinaison de fèves, de café moulu ou de poudre instantanée ou d'un mélange de ceux-ci.

15. Le procédé selon la revendication 9, dans lequel le tampon est sélectionné parmi le groupe constitué par le bicarbonate de sodium ou de potassium, le carbonate de sodium ou de potassium, le citrate de sodium ou de potassium, et le phosphate d'hydrogène disodique ou le phosphate d'hydrogène dipotassium.

**16.** Le procédé selon la revendication 9, dans lequel le stabilisateur peut contenir des émulsifiants conventionnels et des gommes et peut également contenir un dérivé de lait optionnel.

**17.** Le procédé selon la revendication 9, dans lequel la boisson de café prête à boire comprend en outre un ou plusieurs édulcorant(s) sélectionné(s) parmi le groupe constitué par le saccharose, le dextrose, le fructose, le sirop de maïs à haute teneur en fructose, le sucralose, et l'acésulfame K.

**18.** Le procédé selon la revendication 9, dans lequel la boisson de café prête à boire comprend en outre un ou plusieurs agent(s) blanchissant sélectionné(s) parmi le groupe constitué par le lait, la crème, la crème artificielle d'origine non laitière, le lait de soja, le lait de riz, et le lait de noix de coco.

**19.** Un procédé pour générer des notes d'arôme et de saveur de café comprenant l'ajout de thioacétate furfuryle (FFT-Ac) et l'initiation d'une réaction chimique à un taux désiré de manière à générer un niveau désiré de FFT qui sert d'exhausteur d'arôme et de saveur, dans lequel la réaction chimique est lancée par un traitement thermique tel que l'autoclave, l'UHT, la pasteurisation, dans un domaine de température de 85 °C à 170 °C sous atmosphère inerte.

KEY for Figures 1A – 1H:
FFT Acetate refers to furfurylthioacetate
FFT refers to furfurylthiol

| weeks | Black FFT Acetate -40C frozen ppm FFT | Black FFT Acetate 38C ppm FFT | Black FFT 38C ppm FFT | Black Control 38C ppm FFT |
|---|---|---|---|---|
| 0 | 0.79 | 0.79 | 0.54 | 0.34 |
| 2 | 0.91 | 0.71 | 0.53 | 0.36 |
| 4 | 0.94 | 0.42 | 0.34 | 0.09 |
| 9 | 0.83 | 0.35 | 0.41 | 0.09 |

Figure 1A

| weeks | Black FFT Acetate -40C frozen | Black FFT Acetate 38C | Black FFT 38C | Black Control 38C |
| | ppm FFT$_{AC}$ | ppm FFT$_{AC}$ | ppm FFT$_{AC}$ | ppm FFT$_{AC}$ |
|---|---|---|---|---|
| 0 | 0.777 | 0.777 | 0.009 | 0.001 |
| 2 | 0.698 | 0.332 | 0.003 | 0.001 |
| 4 | 0.686 | 0.139 | 0.003 | 0.001 |
| 9 | 0.652 | 0.030 | 0.000 | 0.000 |

Figure 1B

| weeks | Black FFT Acetate -40C frozen ppm FFT | Black FFT Acetate 60C ppm FFT | Black FFT 60C ppm FFT | Black Control 60C ppm FFT |
|---|---|---|---|---|
| 0 | 0.79 | 0.79 | 0.54 | 0.34 |
| 2 | 0.91 | 0.42 | 0.37 | 0.32 |
| 4 | 0.94 | 0.25 | 0.18 | 0.09 |

Figure 1C

Figure 1D

| weeks | Black FFT Acetate -40C frozen ppm FFT$_{AC}$ | Black FFT Acetate 60C ppm FFT$_{AC}$ | Black FFT 60C ppm FFT$_{AC}$ | Black Control 60C ppm FFT$_{AC}$ |
|---|---|---|---|---|
| 0 | 0.777 | 0.777 | 0.009 | 0.001 |
| 2 | 0.698 | 0.010 | 0.001 | 0.000 |
| 4 | 0.686 | 0.007 | 0.001 | 0.001 |

| weeks | Milk FFT Acetate -40C frozen ppm FFT | Milk FFT Acetate 38C ppm FFT | Milk FFT 38C ppm FFT | Milk Control 38C ppm FFT |
|---|---|---|---|---|
| 0 | 1.18 | 1.18 | 0.63 | 0.63 |
| 2 | 0.98 | 0.64 | 0.47 | 0.37 |
| 4 | 0.97 | 0.56 | 0.42 | 0.00 |
| 9 | | 0.54 | 0.70 | 0.23 |

Figure 1E

| weeks | Milk FFT Acetate -40C frozen ppm FFT$_{AC}$ | Milk FFT Acetate 38C ppm FFT$_{AC}$ | Milk FFT 38C ppm FFT$_{AC}$ | Milk Control 38C ppm FFT$_{AC}$ |
|---|---|---|---|---|
| 0 | 0.818 | 0.818 | 0.010 | 0.001 |
| 2 | 0.794 | 0.420 | 0.000 | 0.000 |
| 4 | 0.700 | 0.213 | 0.004 | 0.001 |
| 9 | | 0.044 | 0.000 | 0.000 |

Figure 1F

| weeks | Milk FFT Acetate -40C frozen ppm FFT | Milk FFT Acetate 60C ppm FFT | Milk FFT 60C ppm FFT | Milk Control 60C ppm FFT |
|---|---|---|---|---|
| 0 | 1.18 | 1.18 | 0.63 | 0.63 |
| 2 | 0.98 | 0.34 | 0.29 | 0.33 |
| 4 | 0.97 | 0.30 | 0.24 | 0.00 |

Figure 1G

|  | Milk FFT Acetate -40C frozen | Milk FFT Acetate 60C | Milk FFT 60C | Milk Control 60C |
|---|---|---|---|---|
| weeks | ppm $FFT_{AC}$ | ppm $FFT_{AC}$ | ppm $FFT_{AC}$ | ppm $FFT_{AC}$ |
| 0 | 0.818 | 0.818 | 0.010 | 0.001 |
| 2 | 0.794 | 0.017 | 0.000 | 0.000 |
| 4 | 0.700 | 0.007 | 0.002 | 0.001 |

Figure 1H

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3702253 A

- EP 1170295 A

**Non-patent literature cited in the description**

- **O.G. VITZTHUM ; P. WERKHOFF.** Measurable changes of roasted coffee aroma in oxygen-permeable bag packs. *Chemie, Mikrobiologie, Technologie der Lebensmittel,* 1979, vol. 6 (1), 25-30

- **I. FLAMENT.** Coffee Flavor Chemistry. John Wiley & Sons, LTD, 2002